Europäisches Patentamt

European Patent Office

Office européen des brevets

(11) Numéro de publication: **0 395 485**
**A1**

## (12) DEMANDE DE BREVET EUROPEEN

(21) Numéro de dépôt: 90401092.3

(22) Date de dépôt: 24.04.90

(51) Int. Cl.5: **B60J 10/08**

(30) Priorité: 27.04.89 FR 8905587

(43) Date de publication de la demande:
**31.10.90 Bulletin 90/44**

(84) Etats contractants désignés:
**BE DE ES GB IT LU NL SE**

(71) Demandeur: **HUTCHINSON S.A. une Société Anonyme dotée d'un Conseil de Surveillance et d'un Directoire**
**2, rue Balzac**
**F-75008 Paris(FR)**

(72) Inventeur: **Tollemboom, Jean-Luc**
**42, Rue de Growborough**
**F-45200 Montargis(FR)**

(74) Mandataire: **Orès, Bernard et al**
**Cabinet ORES 6, Avenue de Messine**
**F-75008 Paris(FR)**

(54) **Joint d'étanchéité, en particulier pour portière de véhicule automobile.**

(57) Joint d'étanchéité destiné à être monté par accrochage dans un rail métallique, notamment un rail garnissant la périphérie d'une portière d'automobile.

Il comprend un organe profilé d'étanchéité en matériau élastomère ou plastomère expansé sur sa partie destinée à être logée dans ledit rail (64) et destinée à venir en regard du fond de celui-ci, ledit organe étant propre à être déformé sans effort important lors de la mise en place du joint dans le rail pour former une barrière étanche entre le rail (11) et la partie (60) du joint destiné à être logé dans ledit rail.

FIG.3

## JOINT D'ETANCHEITE, EN PARTICULIER POUR PORTIERE DE VEHICULE AUTOMOBILE

L'invention a pour objet un joint d'étanchéité, en particulier pour portière de véhicule automobile.

Dans les systèmes d'étanchéité pour portière d'automobile, dans lesquels un joint en U est pressé sur le rebord d'une ouverture, comme dans FR-2 335 759, on a déjà proposé d'insérer un matériau élastomère mou sur la surface interne du fond du canal en U. Un tel joint ne convient pas pour équiper la portière elle-même et non la caisse du véhicule automobile, étant donné que le joint doit être rapporté à la périphérie de la portière par accrochage dans un profilé métallique, par exemple à section droite en C quelque peu aplati. Pour assurer une fixation satisfaisante, le joint comprend alors une partie d'ancrage ou de fixation sur le profilé métallique en C solidaire de la porte ou portière et cette partie d'ancrage est relativement suffisamment rigide pour rester en place après montage, alors que la partie active du joint est généralement constituée par un boudin de moins grande dureté ou rigidité que celle de la partie d'ancrage, par exemple en matériau expansé. Avec une telle structure, il n'est pas inhabituel qu'un liquide, par exemple de l'eau de pluie, s'infiltre entre le profilé métallique ou rail solidaire de la porte et cette partie d'ancrage relativement rigide, ce qui constitue, bien entendu, un inconvénient important pour les passagers du véhicule qui ont en outre à souffrir de ce que le manque d'étanchéité à l'eau correspond aussi à une mauvaise isolation acoustique de l'habitacle du véhicule.

C'est, par conséquent, un but général de l'invention de fournir un joint d'étanchéité, notamment pour portière de véhicule automobile, qui pallie cet inconvénient des dispositifs connus.

C'est, aussi, un but de l'invention de fournir un tel joint dont la réalisation soit suffisamment simple pour ne pas grever de façon importante son coût, le prix d'un élément étant souvent une condition sine qua non de son utilisation dans le domaine de l'industrie automobile.

Le problème qui est à la base de l'invention est résolu, selon celle-ci, par le fait que le joint destiné à être monté par accrochage dans un rail métallique, -notamment un tel rail garnissant la périphérie d'une portière d'automobile-, comprend sur sa partie destinée à être logée dans ledit rail une semelle ou embase en un matériau élastomère ou plastomère relativement dur, et sur une face de ladite semelle ou embase destinée à venir en regard du fond du rail, un organe profilé d'étanchéité en matériau élastomère ou plastomère expansé propre à être déformé sans effort important lors de la mise en place de la semelle ou embase dans le rail pour former une barrière étanche entre le rail et ladite embase ou semelle.

Dans une réalisation préférée de l'invention, ledit organe profilé est en un matériau expansé de faible dureté, de l'ordre de 30 Shore et est conformé suivant un cordon ou jonc, un élément tubulaire ou, encore, suivant une ou des lèvres d'étanchéité.

L'organe profilé d'étanchéité, en élastomère ou plastomère expansé est avantageusement rendu solidaire du reste du joint d'étanchéité en étant fabriqué concurremment à celui-ci, par un procédé de co-extrusion.

Lorsque, de plus, la partie d'ancrage du joint est conformée non pas suivant une section droite rectangulaire, -qui est sensiblement celle du rail-, mais suivant une courbe à convexité dirigée à l'opposé de la partie d'ancrage portant l'organe profilé, alors la mise en place du joint dans le rail en est facilitée, que cette mise en place ait lieu manuellement ou automatiquement.

D'autres caractéristiques et avantages de l'invention apparaîtront de la description qui suit, faite à titre d'exemple et en référence au dessin annexé, dans lequel :

- la figure 1 est une vue partielle schématique du bord libre d'une portière de véhicule automobile ;
- la figure 2 est une vue schématique, en coupe et à plus grande échelle, illustrant le montage d'un joint selon l'invention dans le rail métallique équipant la portière ;
- la figure 3 est une vue analogue à celle de la figure 2, mais pour une autre réalisation de l'invention ;
- les figures 4 et 5 sont des vues très schématiques de variantes de réalisation.

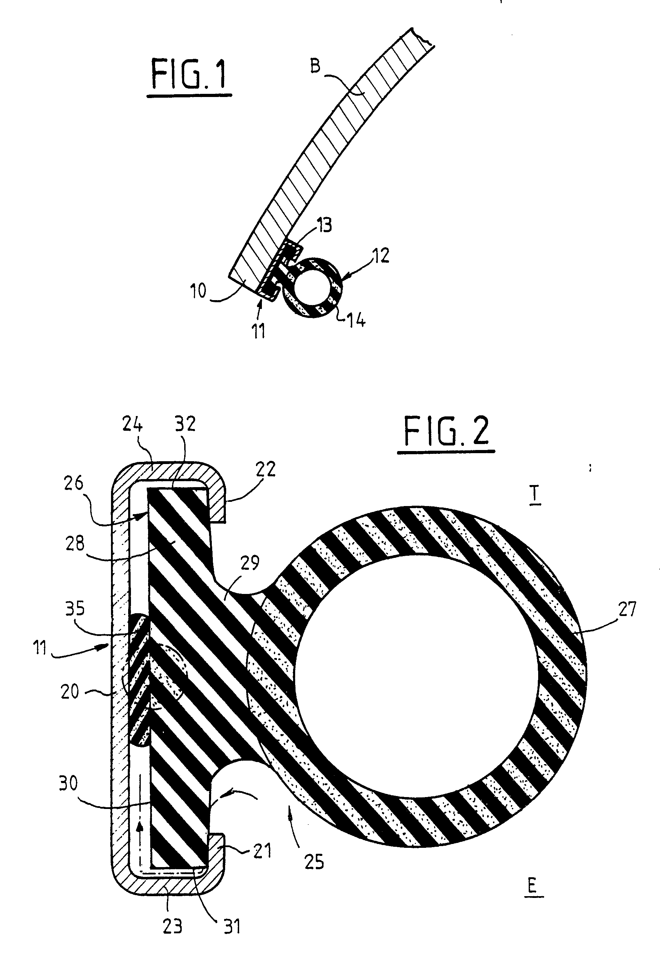

Comme montré sur la figure 1, une portière B d'automobile est munie sur la périphérie de son bord libre 10 d'un rail métallique 11, à section droite générale en forme de C aplati prévu pour le montage par accrochage d'un joint d'étanchéité 12 ; celui-ci, réalisé en matériau(x) élastomère(s) et/ou plastomère(s) comporte, le plus généralement, une partie relativement rigide, 13, de montage dans le rail métallique 11 et une partie active, 14, constituée par un boudin à section droite en forme de courbe fermée. La présence de la partie d'ancrage 13, relativement rigide, a pour conséquence un possible manque d'étanchéité aussi bien à l'air, à l'eau, qu'aux vibrations sonores qui passent dans l'intervalle nécessairement ménagé, -pour permettre la mise en place du joint-, entre le rail métallique et ladite partie d'ancrage dans le rail.

Pour pallier cet inconvénient, l'invention propose d'associer à la partie d'ancrage 13 un organe profilé en matériau élastomère ou plastomère expansé, placé sur la surface de la partie d'ancrage destinée à être au voisinage du fond du rail métallique, après montage du joint sur le rail. Lorsque ce dernier est à fond 20 et ailes 21 et 22 sensiblement parallèles au fond auquel elles sont reliées par des retours 23 et 24, figure 2, le joint 25 comprend une partie d'ancrage 26 à contour conjugué de celui du rail métallique 11 et ainsi quelque peu en forme de T, avec une semelle à section droite sensiblement rectangulaire 28 et un cou 29 reliant ladite semelle à la partie active 27 du joint conformée suivant un boudin dont la section droite est une courbe fermée. La semelle 28 comporte une face plane 30, qui est la plus proche du fond 20 lorsque le joint est monté dans le rail 11 et des faces planes 31 et 32 sensiblement perpendiculaires à la face 30.

Conformément à l'invention, de la semelle 28 est solidaire un organe profilé, par exemple un jonc ou cordon 35, en un matériau élastomère ou plastomère expansé, à section droite sensiblement circulaire et en saillie sur la face plane 30 en étant disposé sensiblement au milieu de ladite face. Le jonc ou cordon 35 ne modifie en rien la mise en place du joint dans le rail métallique mais, lors de cette mise en place, le jonc ou cordon 35 est écrasé entre le fond 20 et la face 30 pour prendre alors une forme à section droite allongée et former une barrière étanche s'opposant à tout passage aussi bien d'ondes sonores que de fluides matériels, comme de l'eau ou de l'air, entre le rail et la partie du joint servant à l'ancrage dans celui-ci. Comme bien visible sur la figure 2, le jonc ou cordon 35 fait obstacle à l'eau, à l'air ou aux vibrations susceptibles de passer de la partie extérieure au véhicule, E, à la partie intérieure, I, entre l'aile 21 et la semelle 28, puis entre le retour 23 et cette semelle et enfin entre le fond 20 et ladite semelle, comme montré schématiquement par la flèche en trait mixte. Le jonc ou cordon 35 de faible dureté, par exemple 30 Shore, est rapporté sur la semelle 28 par tout moyen approprié, mais l'invention prévoit, dans une réalisation préférée, qu'il soit obtenu concurremment à la semelle et à la partie active 27 du joint par coextrusion des matériaux mis en oeuvre.

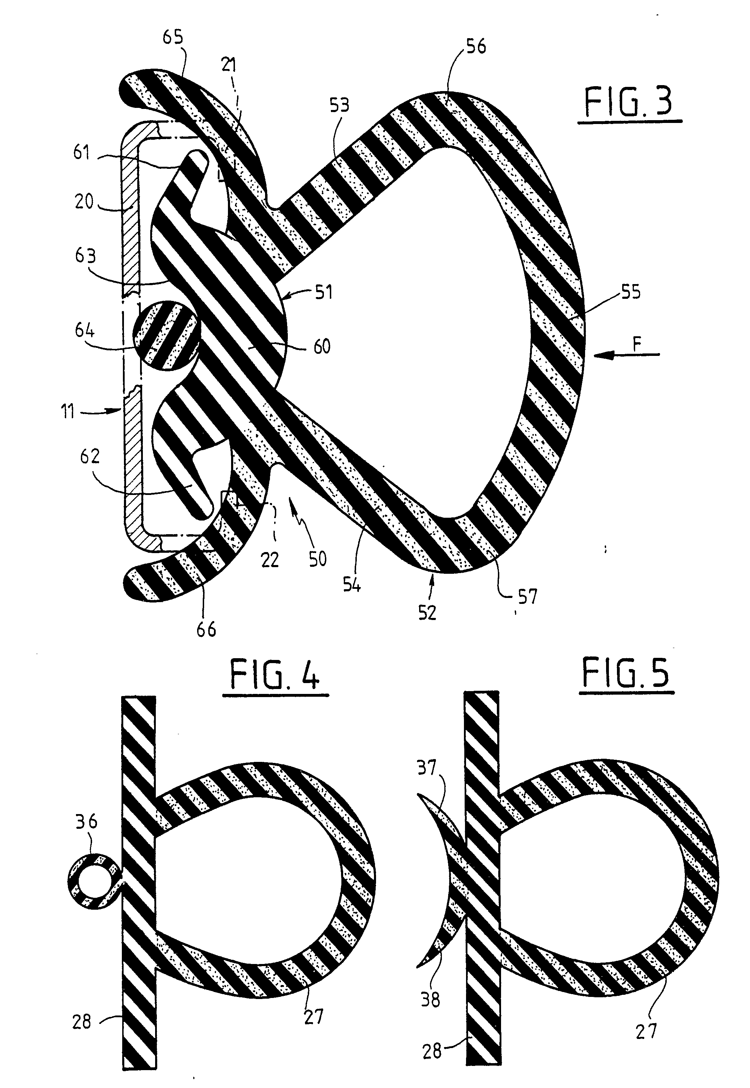

Dans la variante illustrée sur la figure 4, l'organe profilé rapporté sur la semelle 28 est un tube creux 36 d'élastomère ou plastomère expansé, tandis que, dans la variante illustrée sur la figure 5, ledit organe est conformé suivant deux lèvres d'étanchéité 37 et 38, respectivement.

Dans la réalisation montrée sur la figure 3, le joint 50 est lui aussi réalisé en matériaux de duretés différentes, aussi bien élastomères que plastomères et comprend une embase ou semelle 51 en matériau relativement dur et compact coextrudée, pour former un ensemble unitaire, avec une partie 52 d'épaisseur constante en un matériau de type cellulaire, -et ainsi beaucoup plus souple-, formant la partie active du joint, à section droite quelque peu "triangulaire", c'est-à-dire limitée par des faces planes 53 et 54 réunies à l'opposé de leur jonction à la semelle 51 par une voûte 55, incurvée, raccordée aux faces 53 et 54 par des arrondis 56 et 57, respectivement.

Comme bien visible sur la figure 3, également, la semelle 51 présente une partie 60 à convexité tournée vers la voûte 55 et deux ailes 61 et 62 ménagées à la base de la partie 60 donnant ainsi à la section droite de cette semelle quelque peu la forme d'un "chapeau de gendarme". Sur la surface interne, 63, de la semelle 51 est fixé l'organe profilé d'étanchéité 64, ici représenté sous forme d'un jonc ou cordon d'étanchéité à contour circulaire dans sa condition non sollicitée, qui est celle montrée au dessin, lequel est tracé avec la convention usuelle dans l'industrie du caoutchouc d'une représentation à l'état non sollicité, c'est-à-dire avant mise place. Pour réaliser cette dernière, le joint est rapproché du rail métallique 11 puis soit manuellement, soit automatiquement, est introduit dans le rail par un appui exercé dans le sens de la flèche F sur la partie de voûte 55, qui se déforme, et transmet l'effort à la partie convexe 60 de la semelle 51, laquelle fait pénétrer dans le rail les branches ou lèvres 61 et 62 en appliquant simultanément le jonc ou cordon 64 en un matériau souple, expansé, sur le fond 20 du rail.

Comme également montré sur la figure 3, le joint d'étanchéité 50 peut être muni de languettes de finition 65 et 66 venues d'une pièce avec la partie active 52 et en le même matériau que celle-ci. Ici aussi, et la même convention de représentation étant appliquée, les languettes sont illustrées dans leur condition préalable au montage, alors qu'après celui-ci elles reposent, en les dissimulant, sur les ailes 21 et 22 du rail métallique.

## Revendications

1. Joint d'étanchéité destiné à être monté par accrochage dans un rail métallique, notamment un rail garnissant la périphérie d'une portière d'automobile, caractérisé en ce que sa partie destinée à être logée dans ledit rail comporte une semelle ou embase (28, 51) en un matériau élastomère ou plastomère relativement dur, et sur une face (30, 63) de ladite semelle ou embase destinée à venir en regard du fond du rail (11), un organe profilé d'étanchéité en matériau élastomère ou plastomère expansé propre à être déformé sans effort important lors de la mise en place de la semelle ou embase dans le rail pour former une barrière étanche entre le rail (11) et ladite embase ou semelle (28, 59).

2. Joint d'étanchéité selon la revendication 1, caractérisé en ce que ledit organe est un cordon ou jonc (35, 64), un élément tubulaire creux (36) ou est conformé suivant une ou des lèvre(s) d'étanchéité (37, 38).

3. Joint d'étanchéité selon la revendication 1 ou 2, caractérisé en ce que l'organe profilé d'étanchéité (35, 36, 37, 38, 64) en élastomère ou plastomère expansé est rendu solidaire du reste du joint, lors de la fabrication de celui-ci, par un procédé de coextrusion.

4. Joint d'étanchéité selon l'une quelconque des revendications précédentes, caractérisé en ce que l'organe profilé d'étanchéité est en un matériau expansé de faible dureté, de l'ordre de 30 Shore.

5. Joint d'étanchéité selon l'une quelconque des revendications précédentes, caractérisé en ce que son embase ou semelle d'accrochage (51) dans le rail (11) comprend une partie (60) à convexité dirigée à l'opposé de ladite embase.

## FIG.1

## FIG.2

FIG. 3

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | FR-A-2335759 (DRAFTEX)<br>* page 4, ligne 34 - page 5, ligne 23; figures 1-2 *<br>--- | 1-4 | B60J10/08 |
| A | FR-A-2338428 (DRAFTEX)<br>* page 3, ligne 31 - page 4, ligne 13; figures 1-3 *<br>--- | 1-4 | |
| A | GB-A-2092652 (DIXON)<br>* page 2, lignes 4 - 9; figures 4a-4b *<br>----- | 1 | |
| | | | **DOMAINES TECHNIQUES RECHERCHES (Int. Cl.5 )**<br><br>B60J<br>B60R<br>E06B |

Le présent rapport a été établi pour toutes les revendications

| Lieu de la recherche | Date d'achèvement de la recherche | Examinateur |
|---|---|---|
| LA HAYE | 16 JUILLET 1990 | LINTZ C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)